(19) Europäisches Patentamt
European Patent Office
Office européen des brevets

(11) Veröffentlichungsnummer: **0 017 916**
**B1**

(12) # EUROPÄISCHE PATENTSCHRIFT

(45) Veröffentlichungstag der Patentschrift: **31.08.83**

(51) Int. Cl.³: **C 08 G 18/67**, C 08 F 283/00, C 09 J 3/16, C 09 D 3/72

(21) Anmeldenummer: **80101925.8**

(22) Anmeldetag: **10.04.80**

(54) **Verfahren zur Herstellung von Polymerisaten.**

(30) Priorität: **12.04.79 DE 2914984**

(43) Veröffentlichungstag der Anmeldung: **29.10.80 Patentblatt 80/22**

(45) Bekanntmachung des Hinweises auf die Patenterteilung: **31.08.83 Patentblatt 83/35**

(84) Benannte Vertragsstaaten: **AT BE CH DE FR GB IT LI NL SE**

(56) Entgegenhaltungen:
**EP-A-0 000 407**
**FR-A-1 495 558**
**US-A-4 064 194**
**US-A-4 082 710**
**US-E-29 131**

(73) Patentinhaber: **Consortium für elektrochemische Industrie GmbH, Zielstattstrasse 20, D-8000 München 70 (DE)**

(72) Erfinder: **Marquardt, Klaus, Dr. Dipl.-Chem., Unghauserstrasse 39, D-8263 Burghausen (DE)**
Erfinder: **Wiest, Hubert, Dr. Dipl.-Chem., Schweitzer-Strasse 6, D-8263 Burghausen (DE)**

**EP 0 017 916 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polymerisaten

Es ist z.B. aus der DE-A-1 958 211 bekannt, Polymerisate beispielsweise aus Styrol herzustellen, die intern weichgemacht sind durch Acrylsäureester, die hergestellt worden sind aus Hydroxyäthylacrylat und Lactonen. Diese Polymerisate sind kautschukartig, weiss bis hellbraun, besitzen jedoch sehr geringe Festigkeit und sind daher ohne praktischen Wert.

Beispielsweise aus der US-A-3 749 592 sind strahlungshärtbare Massen bekannt, die hergestellt werden, durch Reaktion von Hydroxyäthylacrylat mit einem geringen Unterschuss an Diisocyanatotoluol zu ungesättigten Monoisocyanaten. Diese Monoisocyanate können mit Polyhydroxypolyestern weiter umgesetzt und durch Bestrahlung gehärtet werden. Die Massen enthalten jedoch Nebenprodukte wie Polyurethane, oft mit erhöhtem Molekulargewicht, oder unreagiertes giftiges Diisocyanat. Insbesondere das Isocyanat muss erst umständlich entfernt werden.

Es ist auch bekannt, Klebstoffe auf Basis von ungesättigten Polyestern herzustellen, bei denen aber das Problem einer Gelierung durch unkontrollierte Polymerisation der Doppelbindungen schon bei der Herstellung auftritt. Die Doppelbindung wird in diesen Polyestern entweder durch Umesterung, wie z.B. in der DE-A-2 607 955 beschrieben, bei höheren Temperaturen oder, wie bereits erwähnt, durch Umsetzung von Hydroxyestern der Acrylsäure mit Diisocyanat und Polyhydroxypolyestern eingeführt.

In der US-E-29 131 wird vorgeschlagen, Polycapronsäurepolyole, hergestellt aus Glykolen und Caprolacton, mit (Meth-)Acrylsäure zu verestern und ggf. anschliessend mit Isocyanaten umzusetzen. Bei derartiger Vorgangsweise tritt jedoch eine Reihe von Nebenprodukten auf, die die Qualität aus den dortigen Massen hergestellter Überzüge beeinträchtigen können.

In der EP-A-407 werden Überzugsmassen aus (meth)acrylatverkappten Polyestern beschrieben, denen der Anwender selbst erst noch die nicht ungefährlichen Polyisocyanate zumischen muss und die folglich unter völligem Feuchtigkeitsausschluss gehandhabt werden müssen. Auch für diese Massen gilt das vorstehend zu der US-E Gesagte.

Aufgabe der Erfindung war es daher, ein Verfahren zur Herstellung von Polymerisaten aufzuzeigen, ausgehend von flüssigen Monomeren oder Monomergemischen.

Die Polymerisate sollten auch bei verschiedenen Schichtdicken gleich gute mechanische Eigenschaften besitzen, insbesondere gute Elastizität, von weich-elastomer bis zäh-hart sein und ggf. gute Haftungseigenschaften auf Oberflächen besitzen. Gegenstand der Erfindung ist ein Verfahren zur Herstellung von Polymerisaten aus polymerisierbaren, ungesättigte Gruppen enthaltenden Urethanen, und ggf. weiteren olefinisch ungesättigten Verbindungen, dadurch gekennzeichnet, dass als polymerisierbare ungesättigte Gruppen enthaltende Urethane solche ggf. mit weiteren olefinisch ungesättigten Verbindungen ggf. in Gegenwart von Initiatoren und/oder Katalysatoren radikalisch (co-)polymerisiert werden, die durch Umsetzung von Di- und/oder Polyisocyanatoalkyl- und/oder -arylverbindungen mit Estern bzw. Polyestern der allgemeinen Formel I

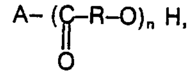

worin bedeuten:

R = geradkettige Kohlenwasserstoffreste mit 2–10 Kohlenstoffatomen, die ggf. durch bis zu 5 Methyl, Äthyl- und/oder Propylgruppen substituiert sein können, wobei innerhalb eines Polyestermoleküls der Formel I alle Reste R gleich sein oder aber die Reste R verschieden sein können,

A = einen äthylenisch ungesättigten Rest der allgemeinen Formel II–V:

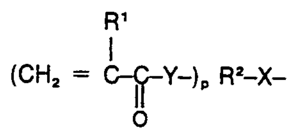

II

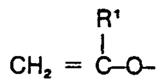

III

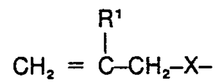

IV

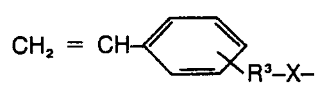

V

mit $R^1$ = H, $CH_3$,

$R^2$ = einem (p + 1)-funktionellen, geradkettigen oder verzweigten Alkyl- oder einen (p + 1)-funktionellen Cycloalkyl-Rest mit jeweils 1–20 Kohlenstoffatomen,

$R^3$ = einem Rest der Bedeutung $R^2$ mit p = 1,

X = O oder $NR^4$,

Y = O, NH oder $NR^4$,

$R^4$ = $CH_3$ oder $C_2H_5$,

n = ganze Zahl von 1 bis 100 und

p = ganze Zahl von 1 bis 3,

in solchen Mol-Verhältnissen, dass das Zahlenverhältnis der Isocyanatogruppen zu den Hydroxylgruppen der Ester bzw. Polyester zwischen 0,2 : 1 und 1 : 1 betragen hat, hergestellt worden sind.

Es ist durch das erfindungsgemässe Verfahren möglich, je nach Verwendungszweck gezielt Polymerisate herzustellen, deren mechanische Eigenschaften von elastomer bis zäh-hart variiert werden können. Die erfindungsgemäss hergestellten Polymerisate zeichnen sich insbesondere durch gute Beständigkeit gegen Hitzeeinwirkung und Lösungsmittel sowie ggf. durch gute Haftungseigenschaften auf Oberflächen aus. Weiterhin sind die

Polymerisate weitestgehend frei von Nebenprodukten, wie z.B. unumgesetzten Diisocyanaten und nichtradikalisch polymerisierten Polyesterurethanverbindungen mit Isocyanato- oder Hydroxyendgruppen.

Vorzugsweise weisen die Polymerisate keine freien Hydroxygruppen auf, was dadurch erreicht wird, dass solche Urethane eingesetzt werden, die durch Umsetzung von Estern bzw. Polyestern der allgemeinen Formel I mit Di- und/oder Polyisocyanatoalkyl- und/oder arylverbindungen sowie ggf. anschliessend mit Alkyl- und/oder Arylmonoisocyanatoverbindungen in einem solchen Mol-Verhältnis hergestellt worden sind, dass dabei insgesamt die Hydroxygruppen der Ester bzw. Polyester zu den Isocyanatogruppen im Zahlenverhältnis von 1 : 1 vorlagen.

Vorzugsweise besitzen die erfindungsgemäss eingesetzten Urethane Molekulargewichte von etwa 300 bis etwa 20 000, besonders vorzugsweise etwa 1000 bis etwa 8000.

Die erfindungsgemäss verwendeten Urethane sind hergestellt aus Estern bzw. Polyestern der Formel I und Di- und/oder Polyisocyanatoalkyl- und/oder arylverbindungen, die mindestens zwei reaktive isocyanato-funktionelle Gruppen enthalten und als zur Herstellung von Polyurethanen geeignet bekannt sind. Zu diesen Verbindungen werden hier auch solche Alkyl- und Arylverbindungen gezählt, deren Isocyanatogruppen bereits mit Polyolverbindungen zu solchen Urethanen umgesetzt worden sind, die ihrerseits aber ebenfalls mindestens zwei reaktive Isocyanatofunktionen besitzen.

Entsprechend werden hier zu den genannten Alkyl- und/oder Arylmonoisocyanatverbindungen auch Reaktionsprodukte von mehrfach funktionellen Isocyanatverbindungen der vorstehend genannten Art mit beispielsweise monofunktionellem Alkohol, ggf. Polyolverbindungen und Alkyl- und/oder Arylmonoisocyanaten mit noch einer Isocyanatofunktion gezählt.

Als einzelne Beispiele für die verschiedenen Isocyanatoverbindungen seien hier genannt: Diisocyanatobenzole und -toluole, 1,6-Diisocyanatohexan, Desmodur L: (ein Umsetzungsprodukt aus Trimethylolpropan und Diisocyanatotoluol), Isocyanatobenzol und Methylisocyanat.

Die erfindungsgemäss eingesetzten Urethane werden durch Umsetzung der Isocyanatoverbindungen mit den Estern bzw. Polyestern der Formel I unter Kühlen, bei Raumtemperatur oder unter Erwärmen bis höchstens 100 °C, jedoch vorzugsweise höchstens bis 60 °C hergestellt (vergleiche Anmeldung EP-A-17 917).

Ein Verfahren zur Herstellung von Estern bzw. Polyestern der Formel I wird z.B. in der DE-A-1 958 211 beschrieben.

Bevorzugt werden Urethane erfindungsgemäss eingesetzt, deren ungesättigte Gruppe A durch die Formeln II und IV bezeichnet werden können. Die in den erfindungsgemäss eingesetzten Urethanen einpolymerisierten Lactoeinheiten leiten sich insbesondere ab von: Propiolacton, Pivalolacton, delta-Valerolacton, Methyl-delta-valerolacton, epsilon-Caprolacton, den Methyl-, Dimethyl- oder Trimethyl-epsilon-caprolactonen, zeta-Önantholacton oder kappa-Undecalacton, vorzugsweise von den genannten Valerolactonen und den genannten Caprolactonen.

Im allgemeinen sind die Urethane vor der erfindungsgemässen Herstellung der Polymerisate flüssig oder schmelzen unterhalb von etwa 60 °C. Ausserdem lösen sie sich leicht in vielen organischen Lösungsmitteln, wobei solche bevorzugt sind, die ebenfalls olefinisch ungesättigte Verbindungen darstellen und mit den ungesättigten Urethanen erfindungsgemäss copolymerisiert werden können. Vorzugsweise sind diese anderen olefinisch ungesättigten Verbindungen in solchen Mischungen in Mengen bis zu 60 Gew.-%, bezogen auf das Gesamtgewicht aller polymerisierbaren Verbindungen in diesen Mischungen, enthalten.

Das erfindungsgemässe Verfahren zur Herstellung von Polymerisaten aus den Urethanen der vorstehend beschriebenen Art und ggf. weiteren olefinisch ungesättigten Verbindungen wird so durchgeführt, dass die Urethane und ggf. weiteren damit copolymerisierbaren Monomeren radikalisch polymerisiert werden.

Die Polymerisation kann durch Erzeugung von Radikalen, auf chemischem Wege oder durch energiereiche Strahlung in Gang gebracht werden. Sollen die Radikale auf chemischem Wege hergestellt werden, werden im allgemeinen Initiatoren zugesetzt, die durch Erwärmen leicht in Radikale zerfallen, die dann ihrerseits die Polymerisation auslösen.

Derartige Initiatoren können ggf. schon bei Raumtemperatur zerfallen, so dass die Polymerisation ohne zusätzliche Erwärmung einsetzt. Ist diese Erscheinung unerwünscht, so kann entweder ein Initiator höherer Zerfallstemperatur eingesetzt werden oder aber es können Polymerisationsinhibitoren, die allgemein bekannt sind, zugesetzt werden. Oftmals genügt es schon, das Reaktionsgemisch bei der Lagerung, z.B. in Polyäthylengefässen, dem Sauerstoff der umgebenden Luft auszusetzen, um eine unerwünschte Polymerisation bei Raumtemperatur zu verhindern. Anderseits können aber ggf. auch zusätzlich zu den Initiatoren Katalysatoren oder Beschleuniger, wie z.B. Dialkylamiline, zugesetzt werden, die eine Radikalbildung aus den Initiatoren auch bei solchen Temperaturen begünstigen, die allein noch keine Auslösung der Polymerisation hervorrufen würden. Für das erfindungsgemässe Verfahren sind alle monomerlöslichen Initiatoren geeignet, die allgemein für radikalische Polymerisationen verwendet werden, z.B. organische peroxidische Verbindungen und Azoverbindungen. Sie werden vorzugsweise in Mengen von 0,001–10 Gew.-%, vorzugsweise 0,1 bis 3 Gew.-%, bezogen auf das Gesamtgewicht aller Monomeren, verwendet.

Die Polymerisation kann erfindungsgemäss auch durch Bestrahlen mit energiereicher Strahlung, beispielsweise Elektronenstrahlung γ-Strahlen oder UV-Licht ausgelöst werden. Da mit UV-Licht erfahrungsgemäss oft nur geringe Polymerisationsgeschwindigkeiten erzielt werden, ist vielfach die Gegenwart von UV-Sensibilisatoren vorteilhaft. Diese Sensibilisatoren verbessern die Radikalbildung bei der Bestrahlung der erfindungsgemäss eingesetzten Massen, wodurch die Polymerisationsgeschwindigkeit heraufgesetzt werden kann.

Beispiele solcher Initiatoren sind unter anderem Thioxanthen-9-on, 2-Methylthioxanthen-9-on, 2-Chlorthioxanthen-9-on, Benzoin, Benzoinalkyläther, Benzil, Benzildialkylketale, Benzophenon, 2,2-Diäthoxyacetophenon oder Michler's Keton. Einige dieser Verbindungen, wie z.B. Benzil, Benzophenon, Thioxanthen-9-on, 2-Methylthioxanthen-9-on oder 2-Chlorthioxanthen-9-on können durch die Zugabe von Coinitiatoren in ihrer Aktivität noch bedeutend gesteigert werden. Geeignete Coinitiatoren sind z.B. tertiäre-Amine. Besonders geeignete tertiäre-Amine sind z.B. Dimethyläthanolamin, Methyldiäthanolamin oder 4-Dimethylaminobenzoesäureäthylester.

Die UV-Initiatoren können einzeln oder als Mischungen ggf. auch mit einem oder mehreren Coinitiatoren eingesetzt werden. Die Einsatzmengen liegen vorzugsweise zwischen 0,001 und 10 Gew.-%, besonders vorzugsweise zwischen 0,5 und 5 Gew.-%, bezogen auf die Monomeren, und können durch wenige Versuche leicht ermittelt werden.

Nach dem erfindungsgemässen Verfahren lassen sich vorteilhaft insbesondere elastomere Formkörper verschiedener Härte und Flexibilität, z.B. Zahnräder, Laufrollen, Hammerkörper, Schuhsohlen, Buchsen, Dichtungen, Faltenbälge, Vibratrionsdämpfer, Kabelummantelungen, Manschetten und flexible Formen zur Herstellung von Kunstgegenständen, Werkzeugen und Bauteilen, beispielsweise aus Gips oder Beton, herstellen. Die Polymerisate lassen sich vorteilhaft auch als weich-elastische bis zäh-harte kratzfeste und wärmebeständige Lackierungen, Überzüge und Beschichtungen auf verschiedenen Materialien, wie z.B. Textilien, Holz und Metall, herstellen.

Ein weiteres Einsatzgebiet sind z.B. strahlungshärtbare Druckfarben. Weiterhin können vorteilhaft durch Anwendung des erfindungsgemässen Verfahrens zum Verbinden von Oberflächen sehr feste Verklebungen hergestellt werden. Werden nach dem erfindungsgemässen Verfahren Polymerisate z.B. als Beschichtung auf Metalloberflächen hergestellt, so zeichnen sie sich durch eine hervorragende Haftung auf den Oberflächen aus, selbst wenn die Metallteile in erheblichem Masse auch schlagartig verformt werden.

Wird besonderer Wert auf die elastomeren Eigenschaften, nicht aber auf Härte und Kratzfestigkeit gelegt, so werden vorzugsweise solche Urethane im erfindungsgemässen Verfahren eingesetzt, die durch Umsetzung von Polyestern der allgemeinen Formel I, worin A, R, $R^1$, $R^2$, $R^3$, $R^4$, X, und Y die vorstehend angegebene Bedeutung haben, p = 1 und n = 2–100, vorzugsweise 3–30, sind, mit solchen Di- oder Polyisocyanatoalkyl- und/oder -arylverbindungen, die bereits als für elastomere Polyurethane geeignet bekannt sind, hergestellt worden sind. Besonders bevorzugt sind solche Urethane, in denen A die Bedeutung

$CH_2=C(R^1)-C(O)-Y-R^3-X-$ oder
$CH_2=C(R^1)-CH_2-X-$

besitzt.

Beispiele für besonders bevorzugte Bedeutungen von A sind der 2-Oxyäthyl-, der 4-Oxybutyl-, der N-(2-Amino)Äthylacrylat- und -methacrylat-, der Allyloxy-, der Methyallyloxy- und der N-(Oxymethyl)acrylamid- und methacrylamidrest. Insbesondere sind besonders bevorzugt, die genannten Oxyalkylacrylat- und methacrylatreste.

Weitere geeignete Reste sind der Vinyloxy- und der p-Oxymethylstyrolrest.

Sollen die erfindungsgemäss hergestellten Polymerisate farblos sein, so geht man vorteilhafterweise von Urethanen aus, die in ihren von den Di- oder Polyisocyanatoverbindungen gebildeten Teilen weitgehend frei von aromatischen Gruppen sind. Sollen sie klar durchsichtig sein und besonders weich-elastisch, so kann es vorteilhaft sein, von einem Gemisch von oben beschriebenen Urethanen und Estern bzw. Polyestern der Formel I auszugehen, das durch Umsetzung der Ester bzw. Polyester der Formel I mit den Di- und/oder Polyisocyanatoverbindungen in einem Mengenverhältnis der Isocyanatogruppen zu den Hydroxygruppen der Ester bzw. Polyester von $<1$ entsteht, und zur Erreichung der Durchsichtigkeit die in diesem Gemisch noch vorhandenen freien Hydroxygruppen mit Monoisocyanatoverbindungen abzureagieren.

Die erfindungsgemäss hergestellten elastomeren Polymerisate sind den kautschukartigen Produkten der DE-A-1 958 211 in ihren mechanischen Eigenschaften überraschenderweise deutlich überlegen.

Die Eigenschaften der erfindungsgemäss hergestellen Produkte lassen sich durch Copolymerisation der oben genannten Urethane mit weiteren olefinisch ungesättigten Verbindungen und durch Zusatz weiterer in Polymerisaten üblichen Zusätzen weiter modifizieren. Die olefinisch ungesättigten Verbindungen können, soweit sie gegenüber Isocyanaten inert sind, bereits als Lösungsmittel bei der Herstellung der Urethane verwendet werden, so dass aufwendige Reinigungs- oder Trennungsschritte nicht notwendig sind.

Geeignete Comonomere für die erfindungsgemässe Copolymerisation der bereits definierten Urethane sind insbesondere bei Raumtemperatur flüssige, radikalisch polymerisierbare Verbindungen, wie z.B. die Acryl- und die Methacrylsäure, vorzugsweise deren Ester mit Alkoholen mit bis zu 8 Kohlenstoffatomen, z.B. also Ester der beiden genannten Säuren mit Methanol, Äthanol, den Propanolen, den Butanolen und mit 2-Äthylhexanol. Weitere geeignete Verbindungen sind Acrylnitril, Methacrylnitril, Styrol, substituierte Styrole, wie Vinyltoluol und Vinylester von Carbonsäuren, vorzugsweise Vinylacetat. Besonders bevorzugt sind Methylmethacrylat und Styrol. Die genannten

Comonomeren werden im erfindungsgemässen Verfahren vorzugsweise in Mengen von 0–50 Gew.-%, besonders vorzugsweise von 20–40 Gew.-%, bezogen auf das Gesamtgewicht aller copolymerisierbaren Verbindungen eingesetzt. Enthalten sein können ggf. auch noch Ester bzw. Polyester der Formel I, die nicht mit den Isocyanatoverbindungen umgesetzt sind.

Das im allgemeinen bei Raumtemperatur flüssige Reaktionsgemisch kann polymerisiert werden durch freie Radikale. Die freien Radikale können erzeugt werden auf chemischem Wege oder durch Bestrahlung, beispielsweise mit Elektronenstrahlen oder durch UV- oder $\gamma$-Strahlung. Dabei ist es oft vorteilhaft, Sensibilisatoren der bereits genannten Art und ggf. Katalysatoren, wie tertiäre-Amine vor der erfindungsgemässen Polymerisation zuzusetzen.

Oftmals ist es jedoch vorteilhaft, die Radikale auf chemischem Wege zu erzeugen, insbesondere bei grossen Schichtdicken oder bei der Polymerisation in Formen.

Hierfür geeignet sind insbesondere thermisch zerfallende organische peroxidische Verbindungen oder Azoverbindungen. Geeignete Peroxide sind unter vielen anderen tert.-Butyl-perpivalat,-peroctoat, -cyclohexylpercarbonat, -perbenzoat, -perisononat, 2,2-Bis(tert.-butylperoxy)butan, Benzoylperoxid, Ditert.butylperoxid, Dicumylperoxid und Methylisobutylketonperoxid. Eine geeignete Azoverbindung ist z.B. das Azoisobutyronitril.

Es können auch Peroxide in Verbindung mit Beschleunigern verwendet werden, so dass bereits bei Raumtemperatur eine Härtung eintritt. Geeignete Kombinationen sind unter vielen anderen die Kombination von Benzoylperoxid mit Dimethylanilin, Dimethyl-p-toluidin oder Diäthylanilin, die Kombination von Ketonperoxiden, wie Methyläthylketonperoxid oder Cyclohexanonperoxid mit Cobaltoctoat oder die Kombination von tert.-Butylperoctoat mit Vanadyldi-p-toluolsulfonat.

Die geeignete Menge an Verbindungen zur Erzeugung freier Radikale liegt vorzugsweise zwischen 0,001 und 10 Gew.-%, besonders vorzugsweise zwischen 0,1 und 3 Gew.-%, bezogen auf die Monomere, und kann durch wenige Versuche leicht ermittelt werden.

In die im erfindungsgemässen Verfahren zur Herstellung elastomerer Polymerisate verwendbaren Gemische können auch weitere Zusätze eingearbeitet werden. Solche Zusätze sind beispielsweise aktive oder inaktive Füllstoffe zur Modifizierung der mechanischen Eigenschaften des Polymeren, des Fliessverhaltens des Gemisches vor der Polymerisation oder des bei der Polymerisation eintretenden Schrumpfes. Beispiele für aktive Füllstoffe sind pyrogen erzeugte Kieselsäuren oder Russe. Sie werden im allgemeinen in Mengen von 0–20 Gew.-%, bezogen auf das Gesamtgewicht, eingesetzt. Beispiele für inaktive Füllstoffe sind unter vielen anderen Quarzmehl, Calciumcarbonat, Diatomeenerde oder Mikroglaskugeln. Sie werden im allgemeinen in Mengen von 0–100 Gew.-% eingearbeitet. Beispiele für Mittel zur Modifizierung des Fliessverhaltens sind neben pyrogen erzeugter Kieselsäure auch organische Thixotropierungsmittel, wie z.B. Rizinusderivate (Thixatrol ST:). Beispiele für einen Füllstoff zur Verringerung des Schrumpfes bei der erfindungsgemässen Polymerisation sind z.B. Polyvinylacetate, Polymethylmethacrylat oder Polycaprolacton.

Zusätzlich zu den Füllstoffen können insgesamt bis zu 10 Gew.-% Farbstoffe oder Farbpigmente, UV-Absorber, Flammschutz- und Alterungsschutzmittel in den im erfindungsgemässen Verfahren eingesetzten Mischungen enthalten sein.

Wird das erfindungsgemässe Verfahren an der Luft durchgeführt, so können bedingt durch die inhibierende Wirkung des Sauerstoffs klebrige Oberflächen entstehen. Um das zu verhindern, können geringe Mengen von Paraffin mit einem Schmelzpunkt von etwa 50 °C, gelöst in einem Lösungsmittel oder einem der Monomeren, zugegeben werden.

Werden nach dem erfindungsgemässen Verfahren Polymerisate als Schutzüberzüge, Lacke oder Beschichtungen hergestellt, bei denen es neben der Zähigkeit besonders auf Kratzfestigkeit ankommt, so werden vorzugsweise solche Urethane ggf. mit weiteren olefinisch ungesättigten Verbindungen (co-)polymerisiert, die hergestellt worden sind aus Di- und/oder Polyisocyanatoalkyl- und/oder -arylverbindungen, wie sie vorstehend erwärmt worden sind und Estern bzw. Polyestern der Formel I mit einem bevorzugten Polymerisationsgrad n von 1–20, besonders vorzugsweise von 1–10. Von diesen sind wiederum die bevorzugt, die als Gruppe A solche der Formel II enthalten.

Werden besonders harte Polymerisate gewünscht, so besteht die Möglichkeit, Urethane einzusetzen, in denen $p > 1$ ist, wodurch die Zahl der Vernetzungen in den Polymerisaten erhöht werden kann.

Beispiele für bevorzugte Reste A in den Urethanen sind die 2-Oxyäthyl-, 4-Oxybutyl-, 2-Aminoäthylacrylat- und -methacrylatreste, die N-(Oxymethyl)acrylamid- und -methacrylamidreste, die Diacryloyl- und Dimethacryloylglycerylreste und die Triacryloyl- und Trimethacryloylpentaerythritreste. Weitere geeignete Reste sind der Vinyloxy-, der Allyloxy-, der Methallyloxy- und der p-Oxymethylstyrolrest. Besonders bevorzugt werden solchen Oxyalkylacrylat- und Oxyalkylmethacrylatreste, die ihre Oxygruppen an $CH_2$-Gruppen gebunden haben.

Sollen die Urethane erfindungsgemäss in sehr kurzer Zeit durch UV-Bestrahlung polymerisiert werden, so sind insbesondere diejenigen bevorzugt, deren Reste A Derviate der Acrylsäure sind.

Weiterhin werden für die erfindungsgemässe Herstellung von besonders als Lacke, Beschichtungen und Überzüge geeigneten Polymerisaten besonders solche Urethane bevorzugt, bei deren Herstellung alle Hydroxyendgruppen mit mehrfunktionellen Isocyanaten umgesetzt worden sind, d.h. dass die Isocyanate bei der Herstellung der

Urethane in solchen Mengen eingesetzt wurden, dass jede Hydroxygruppe eines Esters bzw. Polyesters mit einer Isocyanatogruppe umgesetzt wurde. Sollen die erfindungsgemäss hergestellten Überzüge, Lacke und Beschichtungen farblos sein, so enthalten die Urethane vorzugsweise keine aromatischen Reste, die von den Isocyanatoverbindungen stammen.

Vorzugsweise werden auch die Polymerisate, die als Lacke, Beschichtungen und Überzüge Verwendung finden sollen, erfindungsgemäss durch Copolymerisation der ungesättigten Urethane mit weiteren, bei Raumtemperatur flüssigen olefinisch ungesättigten, radikalisch polymerisierbaren Verbindungen hergestellt.

Bevorzugt sind als derartige Verbindungen die Ester der Acrylsäure und Methacrylsäure mit Alkoholen mit bis zu 8 Kohlenstoffatomen, z.B. mit Methanol, Äthanol, den Propanolen, den Butanolen, insbesondere dem n-Butanol, dem Äthylhexanol und mit 2-Äthoxyäthanol, die Vinylester von Carbonsäuren, insbesondere das Vinylacetat, das N-Vinyl-2-Pyrollidon, Monomere mit mehreren Doppelbindungen, insbesondere Ester der Acrylsäure und der Methacrylsäure mit Polyhydroxyverbindungen, z.B. Äthylenglykol-, Butandiol-, Hexandiol-, Diäthylenglykol- und Triäthylenglykol-diacrylate und -dimethacrylate, Glycerin-, Trimethylolpropan- und Pentaerythrit-triacrylate und -trimethacrylate sowie das Pentaerythrittetraacrylat und -tetramethacrylat.

Weiterhin geeignete ungesättigte Verbindungen sind Acrylnitril, Methacrylnitril, Styrol und substituierte Styrole, wie Vinyltoluol.

Soll die erfindungsgemässe Polymerisation durch UV-Bestrahlung ausgelöst werden, werden wegen der hohen Polymerisationsgeschwindigkeit die Derivate der Acrylsäure bevorzugt.

Die Viskosität der zur erfindungsgemässen Polymerisation verwendeten Mischungen kann durch Zusatz bestimmter Monomere in gewünschter Weise gesteuert werden, z.B. senkt ein Zusatz von N-Vinyl-2-Pyrrolidon die Viskosität der Mischung.

Die mit den Urethanen copolymerisierbaren Monomeren werden insgesamt vorzugsweise in Mengen bis zu 50 Gew.-%, besonders vorzugsweise in Mengen von 20–40 Gew.-%, jeweils bezogen auf das Gesamtgewicht der polymerisierbaren Verbindungen, eingesetzt.

Die Polymerisation kann vorzugsweise in derselben Weise initiiert und geführt werden, die vorstehend, insbesondere für die Polymerisation zu Elastomeren, beschrieben ist. Es können also dieselben Mengen an ggf. gleichen Initiatoren, Katalysatoren und Sensibilisatoren wie dort beschrieben eingesetzt werden.

Die verschiedenen Methoden zur Erzeugung freier Radikale können auch kombiniert werden. So kann z.B. die Polymerisation zunächst durch Bestrahlung mit energiereicher Bestrahlung gestartet werden und nachfolgend unter Verwendung von thermisch in Radikale zerfallenden Initiatoren fortgeführt werden. Auch das umgekehrte Verfahren ist selbstverständlich durchführbar. Selbstverständlich können auf diese Weise auch weich-elastische Polymerisate in grösserer Dicke hergestellt werden.

Neben den bereits genannten Initiatoren, Katalysatoren und Sensibilisatoren können in die im erfindungsgemässen Verfahren für die Herstellung von polymeren Lacken, Überzügen und Beschichtungen verwendeten Massen auch noch andere Zusätze, wie z.B. polymere Verbindungen, Weichmacher, Modifizierungsmittel, die rheologischen Eigenschaften beeinflussen, Pigmente, Farbstoffe, Füllstoffe, Flammschutzmittel und Alterungsschutzmittel enthalten.

Obwohl ein besonderer Vorteil der genannten Massen darin besteht, dass sie auch ohne Lösungsmittel flüssig sind, ist die Anwesenheit von geringen Mengen von Lösungsmitteln, wie aliphatische und aromatische Kohlenwasserstoffe, nicht ausgeschlossen.

Beispiele für polymere Verbindungen sind unter anderem Polyäthylen, Polymethylmethacrylat, Polyäthylacrylat, Polystyrol, Polyvinylchlorid, Polyvinylacetat, Polybutadien, Polyvinylpyrrolidon und deren Copolymere. Sie werden im allgemeinen vorzugsweise in Mengen von 0–20 Gew.-%, bezogen auf das Gesamtgewicht der in das erfindungsgemässe Verfahren eingesetzten Mischungen, verwendet. Diese polymeren Verbindungen können das Aufbringen der genannten Massen auf die mit den Polymerisaten zu überziehenden Substrate erleichtern.

Beispiele für Weichmacher, die vorzugsweise in Mengen von 0–20 Gew.-%, bezogen auf das Gesamtgewicht der erfindungsgemäss eingesetzten Mischungen, verwendet werden, sind z.B. die Ester der Phthalsäure, Adipinsäure oder Sebacinsäure mit längerkettigen aliphatischen Alkoholen, chlorierte Paraffine, Polyesterweichmacher oder Phosphatweichmacher, wie Trioctyl- und Tricresylphosphat.

Beispiele für Füllstoffe sind Quarzmehl und Calciumcarbonat. Beispiele für Pigmente sind Titandioxid und Zinksulfid, Heliogenblau, Heliogengrün und Paliogenrot. Diese Zusätze werden vorzugsweise in Mengen von 0–50 Gew.-% eingesetzt, bezogen auf das Gesamtgewicht der erfindungsgemäss polymerisierbaren Mischungen.

Die erfindungsgemäss hergestellten, vorstehend definierten Polymerisate eignen sich hervorragend als kratzfeste, wärmebeständige Lackierungen, Überzüge und Beschichtungen, z.B. auf Holzuntergründen und auf Metall, beispielsweise auf Blechen, von denen sie auch bei erheblichen schlagartigen Verformungen im allgemeinen nicht abspringen. Weitere Einsatzgebiete für das erfindungsgemässe Verfahren sind die Beschichtungen von Papier, Karton und Textilien und der Verguss von elektronischen Bauteilen, insbesondere, da die Polymerisate auch klardurchsichtig hergestellt werden können.

Das erfindungsgemässe Verfahren kann auch so durchgeführt werden, dass die dabei entstehenden Polymerisate als dauerhafte Kleberverbindungen dienen können.

Besonders vorteilhaft können die Polymerisate so hergestellt werden, dass die erfindungsgemässe Reaktion erst abläuft, wenn das eingesetzte Gemisch von ungesättigten Urethanen und ggf. anderen Verbindungen und Zusätzen der Einwirkung von Sauerstoff, z.B. aus der Luft, entzogen wird.

Vorzugsweise werden hierbei Urethane erfindungsgemäss verwendet, die keine freien Hydroxygruppen besitzen, d.h. bei deren Herstellung die Ester bzw. Polyester der Formel I mit polyfunktionellen Isocyanaten der bereits definierten Art in einem Mengenverhältnis umgesetzt wurden, das jede Hydroxygruppe mit einer Isocyanatogruppe abreagieren konnte.

Besonders bevorzugt werden solche Urethane, deren Gruppen A die Bedeutungen der Formel II besitzen und in denen der Polymerisationsgrad n eine Zahl von 1–20, insbesondere von 1–10 ist.

Wie bei allen erfindungsgemäss eingesetzten Urethanen liegt auch hier meist ein Gemisch verschiedener Urethane vor, zu deren Herstellung Gemische von Estern bzw. Polyestern der Formel I mit mittleren Polymerisationsgraden, die in den jeweils für n angegebenen Bereichen liegen, verwendet wurden.

Bevorzugte Bedeutungen der Reste A der Urethane, die zur erfindungsgemässen Herstellung von Polymerisaten als Klebeverbindungen zwischen zu verbindenden Flächen verwendet werden, sind die 2-Oxyäthyl-, die 4-Oxybutyl-, die 2-Aminoäthylacrylat- und -methacrylatreste, die N-(Oxymethyl)Acrylamid- und -methacrylamidreste, die Diacryloyl- und Dimethacryloylglycerylreste und die Triacryloyl- und -Trimethacryloylpentaerythritreste. Besonders bevorzugt sind die Oxyalkylmethacrylatreste mit primären Oxygruppen.

Die erfindungsgemäss verwendeten Urethane zur Herstellung der als Klebeverbindungen dienenden Polymerisate, können mit weiteren olefinisch ungesättigten Verbindungen gemischt und erfindungsgemäss copolymerisiert werden. Vorzugsweise sind die oben genannten Urethane diesen Gemischen zu bis zu 90 Gew.-%, bezogen auf das Gesamtgewicht, enthalten. Besonders vorzugsweise werden sie mit 10–60 Gew.-%, bezogen auf die Gesamtmenge an polymerisierbaren Anteilen, mit ggf. noch freie Hydroxygruppen aufweisenden Methacrylsäureestern von Alkanolen und Cycloalkanolen copolymerisiert. Beispiele für geeignete Methacrylate sind: Tetrahydrofurfuryl-, 5,6-Dihydrodicyclopentadienyl-, Cyclohexyl-, Äthylhexyl-, Hydroxyäthyl-, und Hydroxypropylmethacrylat, Äthylenglykol-, Diäthylenglykol-, Triäthylenglykol- und Polyäthylenglykol-dimethacrylat, Trimethylolpropan-trimethacrylat, Pentaerythrittri- und -tetramethacrylat.

In einer besonders bevorzugten Ausführungsform enthält die Mischung, die erfindungsgemäss zur Herstellung von Klebeverbindungen oder Dichtungen, bestehend aus den Polymerisaten, verwendet wird, 40–80 Gew.-% der oben definierten ungesättigten Urethane und 20–60 Gew.-% der Methacrylsäureester, jeweils bezogen auf die Gesamtmenge der polymerisierbaren Anteile. Ausserdem können noch geringe Mengen polymerisierbarer Carbonsäuren, wie Methacrylsäure, Acrylsäure, Fumarsäure, Maleinsäure und Crotonsäure enthalten sein.

Zur Herstellung von Klebeverbindungen nach dem erfindungsgemässen Verfahren wird die Polymerisation vorteilhaft ausgelöst durch thermisch in Radikale zerfallende Verbindungen, wie z.B. durch in den vorstehend genannten Verbindungen lösliche Peroxide und Hydroperoxide.

Beispiele darüf sind die tert.-Butylester der Perbenzoesäure, der Perphthalsäure und Peressigsäure; das tert.-Butylperoxyisopropylcarbonat, das n-Butyl(4,4-bis -tert.-butylperoxy)-valerat, das 2,2-Bis(tert.-butylperoxy)butan, das Di-tert.-Butylperoxid, das 2,5-Dimethyl-2,5-bis(tert.-butylperoxy)hexan, das Bis(1-hydroxy-cyclohexyl)peroxid.

Besonders geeignet sind organische Hydroperoxide, die sich von solchen Kohlenwasserstoffen herleiten, welche etwa 3 bis 18 Kohlenstoffatome enthalten. Beispiele hierfür sind tert.-Butylhydroperoxid, Cumolhydroperoxid, Methyläthylketonhydroperoxid und Diisopropylbenzolhydroperoxid.

Die Peroxide werden vorzugsweise in Mengen von 0,1–20 Gew.-%, insbesondere von 0,5–10 Gew.-%, bezogen auf das Gesamtgewicht des Gemisches, im erfindungsgemässen Verfahren eingesetzt.

Um eine unkontrollierte Polymerisation zu verhindern, können in die für das erfindungsgemässe Verfahren geeigneten Mischungen auch Zusätze zur Stabilisierung eingebracht werden. Geeignete Stabilisatoren sind beispielsweise mehrwertige Phenole und Chinone, z.B. Hydrochinon und Di-tert.-Butylhydrochinon. Diese Inhibitoren werden im allgemeinen vorteilhafterweise nur in geringen Mengen von etwa 0,01 bis etwa 0,1 Gew.-%, bezogen auf das Gesamtgewicht, eingebracht. Ggf. können jedoch auch Polymerisationsbeschleuniger enthalten sein, wie tertiäre Amine, z.B. Triäthylendiamin, Dimethylanilin, Mercaptane, z.B. Octyl- und Dodecylmercaptan, und Hydrazide wie Toluolsulfonsäurehydrazid. Sie werden ggf. vorzugsweise in Mengen von etwa 0,1 bis 5 Gew.-%, bezogen auf das Gesamtgewicht, zugesetzt.

Es ist selbstverständlich auch möglich, in die erfindungsgemäss hergestellten Polymerisate andere Zusätze einzubringen, indem man vor der Polymerisation in die erfindungsgemäss zu polymerisierenden Gemische, die auch als Reaktivkleber bezeichnet werden können, diese Zusätze einmischt, z.B. Farbstoffe und Weichmacher. Auch können in diese Gemische Verdickungsmittel, z.B. polymere Verbindungen wie Polymethylmethacrylat, Polyäthylacrylat und Polystyrol, und Füllstoffe wie feinverteilte Kieselsäure, Calciumsilicat, Benthonite, Calciumcarbonat und Titandioxid in den bisher üblichen Mengen eingebracht werden. Die erfindungsgemäss zu polymerisierenden vorstehend beschriebenen Gemische polymerisieren vorteilhafterweise erst dann aus,

wenn sie vom Zutritt von Sauerstoff, z. B. der Luft, abgeschlossen werden.

Somit kann die erfindungsgemässe Polymerisation verhindert werden, indem man die fertigen Gemische in Gefässen aufbewahrt, die ggf. auch nur in geringem Masse sauerstoffdurchlässig sind, z. B. Gefässe aus Polyäthylen. Anderseits kann dadurch gezielt, auch nach einer Lagerzeit von Wochen und Monaten, die Polymerisation erfindungsgemäss eingeleitet werden, indem der Reaktivkleber vom Zutritt von Sauerstoff abgeschnitten wird.

Das erfindungsgemässe Verfahren eignet sich daher insbesondere zum Verkleben von Flächen, vorzugsweise von Metallen, wie Eisen, Messing, Kupfer und Aluminium, oder zum Abdichten von Fugen. Dazu bringt man geringe Mengen der erfindungsgemäss polymerisierbaren Gemische zwischen die zu verbindenden Fläche, welche so aufeinandergelegt werden, dass die Luft bzw. der Sauerstoff ausgeschlossen ist. Nach kurzer Zeit, z. B. nach etwa 1 bis 3 Stunden, erhält man bereits eine Verbindung zwischen den genannten Materialien, welche nach etwa 24 bis 120 Stunden ihre Endfestigkeit erreicht. Gegebenenfalls kann man die erfindungsgemässe Polymerisation durch Erwärmen bis etwa 150 °C beschleunigen.

Soll das erfindungsgemässe Verfahren zum Verkleben oder Abdichten von Glas, Kunststoffen oder von katalytisch wenig aktiven Metallen, wie Zink, Kadmium, hochlegierten Stählen oder eloxiertem Aluminium verwendet werden, so ist es oft zweckmässig, diese Materialien vorher mit beschleunigend wirkenden Metallsalzen, z. B. Kupfer- oder Kobaltnaphtenat, zu behandeln.

Technische Anwendung kann das erfindungsgemässe Verfahren zur Herstellung von Polymerisaten als Klebeverbindung unter anderem finden zum Fixieren von Schrauben in ihren Gewindegängen, zum Abdichten von Schraubverbindungen, zum Festlegen von Steckverbindungen oder zum Abdichten von Flanschen.

Die folgenden Beispiele dienen der weiteren Erläuterung der Erfindung. Propiolacton, Valerolacton und Caprolacton bedeuten stets beta-Propiolacton, delta-Valerolacton bzw. epsilon-Caprolacton. Sofern nichts anderes angegeben, beziehen sich Prozentangaben stets auf das Gesamtgewicht der Mischungen.

Beispiel 1

Ein ungesättigter Polyester der allgemeinen Formel I wurde aus 130,1 g(1 Mol) Hydroxyäthylmethacrylat und 688,5 g (6 Mol) Caprolacton in Gegenwart von 0,82 g (0,1 Gew.-%) p-Toluolsulfonsäure und 0,82 g (0,1 Gew.-%) 2,5-Di-tert.-Butylchinon bei 20 bis 40 °C in 12 Stunden polymerisiert.

Vergleichsversuch A:

Der ungesättigte Polyester aus Beispiel 1 wurde mit Methylmethacrylat im Gewichtsverhältnis 70 : 30 gemischt und nach Zusatz von 5,85 g (0,5 Gew.-%) tert.-Butylperoctoat bei 60 bis 80 °C zwischen Glasplatten innerhalb von 6 Stunden zu einer 3 mm dicken Prüfplatte polymerisiert. Es ergibt sich ein opak-weisses, weiches Material, dessen Eigenschaften in Tabelle 1 wiedergegeben sind.

Vergleichsversuch B:

Ein analog Beispiel 1 hergestellter Polyester aus 130,1 g (1 Mol) Hydroxyäthylmethacrylat und 2,295 g (20 Mol) Caprolacton wird im Gewichtsverhältnis 70 : 30 im Methylmethacrylat gelöst und mit 17,32 g (0,5 Gew.-%) tert.-Butylperoctoat bei 60 °C über Nacht polymerisiert. Es entsteht ein oberhalb 50 °C weisslichtrübes, weiches, klebriges Material, das nach Abkühlung auf Raumtemperatur zu einem weissen, hart-spröden Körper ohne elastische Eigenschaften erstarrt.

Die in den Beispielen 2 bis 12 hergestellten Materialien wurden alle zwischen mit Trennmittel besprühten Glasplatten gehärtet. Als Abstandshalter diente eine 3 mm dicke Dichtung aus Nitrilkautschuk. Die Eigenschaften der Produkte sind ebenfalls in Tabelle 1 aufgeführt.

Beispiel 2

Ein Mol des nach Beispiel 1 hergestellten Polyesters wurde mit der stöchiometrischen Menge (0,5 Mol) Diisocyanatotoluol in der Schmelze bei 50 °C umgesetzt. Das entstandene Urethan wurde dann im Verhältnis 70 : 30 in Methylmethacrylat gelöst und mit 0,5 Gew.-% tert.-Butylperoctoat bei 60–80 °C innerhalb 6 Stunden polymerisiert.

Beispiel 3

Beispiel 2 wurde wiederholt mit der Abänderung, dass das Methylmethacrylat durch die gleiche Menge Styrol ersetzt wurde.

Beispiel 4

Beispiel 2 wurde wiederholt mit der Abänderung, dass der Zusatz von Methylmethacrylat unterblieb.

Beispiel 5

Der Vergleichsversuch B wurde wiederholt mit der Abänderung, dass vor der Polymerisation der Polyester mit 0,5 Mol Diisocyanatotoluol bei Raumtemperatur umgesetzt wurde. Bei der anschliessenden Polymerisation entstand ein klarer, leicht gelblicher, sehr elastischer Probekörper, der auch bei −20 °C nicht trüb wurde.

Beispiel 6

Ein analog Beispiel 1 hergestellter ungesättigter Polyester aus 1 Mol 4-Hydroxybutylacrylat und 3 Mol Caprolacton wird mit Diisocyanatotoluol bei 15 bis 20 °C umgesetzt. Dieses Produkt (Viskosität 1.130 mPas) wurde im Gewichtsverhältnis 70 : 30 mit Methylmethacrylat gemischt (Viskosität der Mischung 33 mPas) und nach Zugabe von 0,5 Gew.-% tert.-Butylperoctoat bei 60 °C polymerisiert.

Beispiel 7

Ein analog Beispiel 1 hergestellter ungesättigter Polyester aus 1 Mol Hydroxyäthylmethacrylat

und 5 Mol Caprolacton wurde mit 0,33 Mol trimerisiertem Hexamethylendiisocyanat (Desmodur ®N, Bayer AG) und 0,1 Gew.-% Dibutylzinndilaurat bei Raumtemperatur 6 Stunden lang umgesetzt. Zu einer Lösung von 70 Gew.-Teilen des so hergestellten Urethans in 30 Gew.-Teilen Methylmethacrylat wurden 2 Gew.-% Benzoin zugesetzt. Diese Mischung wurde in einer 3 mm tiefen Schale, abgedeckt mit einer dünnen Polyesterfolie, 30 Minuten lang mit UV-Licht (Wellenlängen von 300 bis 830 nm, Xenonstrahler, Bestrahlungsstärke 585 W/m²) bestrahlt und dadurch polymerisiert.

Beispiel 8
Der Polyester von Beispiel 1 wurde bei Raumtemperatur unter Zusatz von 0,1 Gew.-% Dibutylzinndilaurat mit 0,5 Mol Isophorondiisocyanat (3-Isocyanatomethyl-3,5,5-Trimethylcyclohexylisocyanat) umgesetzt. 70 Gew.-% des so hergestellten Urethans wurden in 30 Gew.-Teilen Methylmethacrylat gelöst und nach Zusatz von 0,5 Gew.-% tert.-Butylperoctoat bei 70 °C polymerisiert.

Beispiel 9
Ein analog Beispiel 1 hergestellter ungesättigter Polyester aus 1 Mol Allylalkohol und 5 Mol Caprolacton wurde mit 0,33 Mol trimerisiertem Hexamethylendiisocyanat (Desmodur ®N) bei 60 °C während 3 Stunden umgesetzt. 70 Gew.-Teile des so hergestellten Urethans wurden in 30 Gew.-Teilen Methylmethacrylat gelöst und nach Zusatz von 3 Gew.-% tert.-Butylperoctoat bei von 60 °C langsam auf 100 °C steigender Temperatur während 8 Stunden polymerisiert.

Beispiel 10
70 Gewichtsteile des Polyesters von Beispiel 1 wurden in 30 Gewichtsteilen Methylmethacrylat gelöst und mit 0,1 Mol Diisocyanatotoluol und anschliessend mit 0,8 Mol Phenylisocyanat bei Raumtemperatur umgesetzt. Nach Polymerisation unter Zusatz von 0,5 Gew.-% tert.-Butylperoctoat bei 60–80 °C entstand eine leicht gelbliche gefärbte, aber klar durchsichtige Prüfplatte.

Beispiel 11
Beispiel 5 wurde wiederholt unter Zusatz von 10 Gew.-% hochdisperser Kieselsäure (Wacker HDK ®H 2000, Wacker Chemie GmbH, München) zum unpolymerisierten Urethan.

Beispiel 12
Beispiel 11 wurde wiederholt mit der Abänderung, dass statt der hochdispersen Kieselsäure 50 Gew.-% Quarzmehl (Typ N 400) als Füllstoff zugesetzt wurden.

Tabelle 1:
Eigenschaften der in den Beispielen 2–12 hergestellten Produkte

| Beispiel Nr. | Aussehen | Zugfestigkeit DIN 53504 N/mm² | Bruchdehnung DIN 53504 % | Shore Härte DIN 53505 | Weiterreissfestigkeit ASTM-D 624 B N/mm | Glasübergangstemperatur °C |
|---|---|---|---|---|---|---|
| Vergleich A | weisslich trüb | 0,5 | 301 | A 10 | 3 | |
| 2 | klar, leichtgelb | 13,0 | 220 | A 71 | 27 | – 9 |
| 3 | klar, leichtgelb | 9,6 | 200 | A 69 | 23 | |
| 4 | klar, farblos | 2,0 | 31 | A 79 | 4 | |
| 5 | klar, leichtgelb | 9,7 | 435 | A 57 | 18 | –41 |
| 6 | klar, gelblich | 8,4 | 120 | A 76 | 32 | |
| 7 | klar, farblos | 8,6 | 150 | A 77 | 22 | |
| 8 | klar, farblos | 10,0 | 190 | A 71 | 24 | |
| 9 | klar, farblos | 8,4 | 100 | A 86 | 21 | |
| 10 | klar, gelblich | 2,6 | 230 | A 38 | 10 | |
| 11 | fast klar, leichtgelb | 9,5 | 186 | A 94 | 66 | |
| 12 | braungrau | 5,9 | 42 | A 94 | 62 | |

Beispiel 13
An den in den Beispielen 2 und 5 hergestellten Elastomeren wurde der Druckverformungsrest nach DIN 53517 (Deutsche Industrienorm) bei Raumtemperatur und 70 Stunden Belastung ermittelt. Es ergaben sich folgende Werte:

| | Beispiel 1 | Beispiel 2 |
|---|---|---|
| unmittelbar nach Entlastung (%) | 0,8 | 2,4 |
| 1 min nach Entlastung (%) | 0,8 | 0,9 |
| 20 h nach Entlastung (%) | 0,3 | 0,5 |

Die Beispiele 14 bis 26 verdeutlichen die Eignung des erfindungsgemässen Verfahrens zur Herstellung von Überzügen. Dazu wurden verschiedene analog Beispiel 1 hergestellte Polyester zunächst mit Isocyanaten zu Urethanen umgesetzt (Tabelle 2).

Tabelle 2:

| | Urethanzusammensetzung | Katalysator | Reaktionsdauer | Reaktionstemperatur | Eigenschaften des Urethans (bei Raumtemperatur) |
|---|---|---|---|---|---|
| a | 1 Mol HBA, 6 Mol CL, 0,333 Mol trimerisiertes DIT | 0,15 Gew.-% DBTL | 7 h | 45° C | wachsartig |
| b | 1 Mol HBA, 3 Mol CL, 0,5 Mol DIT | – | 7 h | 35° C | flüssig |
| c | 1 Mol HBA, 3 Mol Cl, 0,5 Mol IDI | 0,15 Gew.-% DBTL | 7 h | 35° C | flüssig |
| d | 1 Mol HBA, 2 Mol CL, 0,5 Mol IDI | 0,15 Gew.-% DBTL | 7 h | 35° C | flüssig |
| e | 1 Mol HEMA, 1 Mol CL, 0,5 Mol IDI | – | 7 h | 35° C | flüssig |
| f | 1 Mol HBA, 4 Mol PL, 0,5 Mol IDI | 0,15 Gew.-% DBTL | 7 h | 35° C | flüssig |
| g | 1 Mol HEMA, 3 Mol CL, 0,5 Mol DIT | – | 7 h | 35° C | flüssig |
| h | 1 Mol HEMA, 1 Mol CL, 0,5 Mol DIT | – | 7 h | 35° C | flüssig |

HBA = 4-Hydroxybutyl-acetat
HEMA = Hydroxyäthylmethacrylat
MMA = Methylmethacrylat
CL = epsilon-Caprolacton
PL = beta-Propiolacton
DIT = Diisocyanatotoluol
IDI = Isophorondiisocyanat
DBTL = Dibutylzinndilaurat

Die Urethane a bis f wurden wie in Tabelle 3 angegeben mit Monomeren gemischt und mit 0,5 Gew.-% 2-Chlorhioxynthen-9-on und 2 Gew.-% 4-Dimethylaminobenzoesäureäthylester versetzt. Diese Mischung wurde in 25 Micrometer Dicke auf Stahlbleche (200 × 35 × 0,3 $mm^3$) aufgebracht, die vorher entfettet, mit 20prozentiger Phosphorsäure behandelt, gespült und getrocknet worden waren. Die beschichteten Bleche wurden unter Stickstoffatmosphäre 15 Sekunden lang mit einem Xenonstrahler (Lichtwellenlänge 300 bis 830 nm) im Abstand von 15 cm von der Lampe bestrahlt. Die Bestrahlungsstärke lag bei 585 $W/cm^2$.

An den gehärteten Filmen wurden Prüfungen der Bleistifthärte und der Pendelhärte nach König (DIN 53157), Dornbiegeversuche (DIN 53152) und Kugelschlagprüfungen (ASTM-D 2794) durchgeführt. Tabelle 3 gibt die Ergebnisse wieder.

Tabelle 3:
Herstellung und Eigenschaften von Überzügen aus den erfindungsgemässen Massen

| Beispiel Nr. | Urethan (Tabelle 2) | Gew.-Teile | Monomer | Gew.-Teile | Bleistifthärte | Könighärte (sec) | Dornbiegeprüfung (mm) | Kugelschlagprüfung (inch·lb) | Glasübergangstemperatur |
|---|---|---|---|---|---|---|---|---|---|
| 14 | a | 70 | Butandioldiacrylat | 30 | 4 H | 56 | 2 | 48 | |
| 15 | a | 70 | Hexandioldiacrylat | 30 | 4 H | 48 | 2 | 50 | |
| 16 | a | 70 | N-Vinylpyrrolidon | 30 | 3 H | 34 | | 24 | |
| 17 | a | 70 | Trimethylolpropantriacrylat | 30 | 4 H | 46 | 2 | 40 | –30° C |
| 18 | b | 70 | Trimethylolpropantriacrylat | 30 | 6 H | 32 | 3 | 24 | |
| 19 | c | 70 | Trimethylolpropantriacrylat | 30 | 7 H | 31 | 2 | 30 | |
| 20 | c | 60 | Trimethylolpropantriacrylat | 40 | 7 H | 45 | | | |
| 21 | c | 50 | Trimethylolpropantriacrylat | 50 | 7 H | 55 | | | |
| 22 | d | 100 | – | – | 6 H | 240 | | | |
| 23* | e | 100 | – | – | 6 H | 144 | | | |
| 24 | f | 70 | Butandioldiacrylat | 30 | 7 H | | | | |
| 25 | f | 70 | N-Vinylpyrrolidon | 30 | 5 H | | | | |
| 26 | c | 100 | – | – | 3 H | | | | |

* Bestrahlungszeit 5 Min.

Beispiel 27

Ein analog Beispiel 1 hergestellter ungesättigter Polyester aus 1 Mol Hydroxyäthylmethacrylat und 2 Mol Caprolacton wurde im Gewichtsverhältnis 70 : 30 in Methylmethacrylat gelöst, mit 0,5 Mol Diisocyanatotoluol versetzt, so dass die Temperatur nicht über 35 °C anstieg. Nach 7 Stunden liess sich kein freies Diisocyanatotoluol mehr nachweisen. Das entstandene dünnflüssige Urethan wurde mit 0,5 Gew.-% tert.-Butylperoctoat versetzt und analog Beispiel 2 polymerisiert. Der entstandene zäh-harte, glasklare Formkörper besass folgende Eigenschaften:

| | |
|---|---|
| Zugfestigkeit (DIN 53504) | 25,0 N/mm² |
| Bruchdehnung (DIN 53504) | 52% |
| Shorehärte | D 70 |

Beispiel 28

Beispiel 19 wurde dahingehend abgeändert, dass ein Überzug von 0,5 mm Dicke auf Hartholz erzeugt wurde. Das Ausdrücken von brennenden Zigaretten verfärbte das unter dem Überzug befindliche Holz, der Überzug selbst blieb dagegen unbeschädigt.

Die folgenden Beispiele 29–33 zeigen die Eignung des erfindungsgemässen Verfahrens zur Herstellung von Verklebungen. Die Festigkeit der so erzeugten Verklebungen wurde wie folgt gemessen:

Prüfung A

Die Zugscherfestigkeit nach DIN 53283 wurde an sandgestrahlten einfach überlappten Prüfkörpern aus Stahlblechen (DIN 1541/ST 1203, 100 × 20 × 1,5 $mm^3$) und Aluminiumblechen (DIN 1783/AL-CuMg 2 pl., 100 × 25 × 1,5 $mm^3$) (Überlappungslänge 10 mm) nach 72stündiger Aushärtung bei Raumtemperatur auf einer Zerreissmaschine (Vorschub 20 mm/Min.) gemessen. Angegeben ist der Mittelwert aus 5 Messungen.

Tabelle 4:

| Beispiel Nr. | Urethan aus Tabelle 2 | Menge (g) | Comonomer | Menge (g) | Cumolhydroperoxyd (80%) (g) | Tributylamin (g) | Zugscherfestigkeit in Prüfung A Stahl (N/mm²) | Alu (N/mm²) | max. Drehmoment in Prüfung B (Nm) |
|---|---|---|---|---|---|---|---|---|---|
| 29 | h | 16,4 | Butandioldimethacrylat | 7 | 1,4 | 0,2 | 3,9 | 1,5 | 60 |
| 30 | e | 23,5 | – | – | 1,25 | 0,25 | – | – | 35 |
| 31 | e | 16,4 | Butandioldimethacrylat | 7 | 1,4 | 0,2 | 6,0 | 3,3 | 75 |
| 32 | g | 16,4 | Butandioldimethacrylat | 7 | 1,4 | 0,2 | 6,1 | 3,5 | 100 |
| 33 | g | 15,8 | Hydroxyäthylmethacrylat | 6,8 | | | | | |
| | | | Methacrylsäure | 0,7 | 1,1 | 0,25 | 13,1 | 12,8 | >100 |

Prüfung B

Die Festigkeit einer Schraubenverklebung wurde anhand des zum Losbrechen der Mutter notwendigen Drehmoments ermittelt. Schrauben (M 6 × 15, DIN 933 8.8) und Muttern (M 6, DIN 934 8.8) wurden verklebt, 12 Stunden bei 50 °C gelagert und dann im Schraubstock mit einem Drehmomentschlüssel geöffnet. Angegeben ist der Mittelwert aus 3 Messungen.

Die in den Beispielen 29–33 eingesetzten Urethane sind in der Tabelle 2 aufgeführt. Sie wurden zusätzlich durch Zusatz von 250 ppm Di-tert.-Butylbenzochinon, bezogen auf das Gewicht der Urethane, stabilisiert.

Beispiele 29–33

Aus Tabelle 4 ist die Zusammensetzung der erfindungsgemäss polymerisierbaren Gemische ersichtlich. Diese Gemische (Reaktivkleber) wurden in Mengen von 25 g gemischt und in 100 ml Polyäthylenflaschen aufbewahrt. Die Gemische waren länger als 3 Monate lagerstabil. Die Eigenschaften der als Klebeverbindung hergestellten Polymerisate sind ebenfalls Tabelle 4 zu entnehmen.

**Patentansprüche**

1. Verfahren zur Herstellung von Polymerisaten aus polymerisierbaren ungesättigte Gruppen enthaltenden Urethanen und ggf. weiteren olefinisch ungesättigten Verbindungen, dadurch gekennzeichnet, dass als polymerisierbare ungesättigte Gruppen enthaltende Urethane solche, ggf. mit weiteren olefinisch ungesättigten Verbindungen ggf. in Gegenwart von Initiatoren, Sensibilisatoren und/oder Katalysatoren radikalisch (co-)polymerisiert werden, die durch Umsetzung von Di- und/oder Polyisocyanatoalkyl- und/oder -arylverbindungen mit Estern bzw. Polyestern der allgemeinen Formel I

$$A-(\underset{\underset{O}{\|}}{C}-R-O)_n\,H,$$

worin bedeuten:

R = geradkettige Kohlenwasserstoffreste mit 2–10 Kohlenstoffatomen, die ggf. durch bis zu 5 Methyl-, Äthyl- und/oder Propylgruppen substituiert sein können, wobei innerhalb eines Polyestermoleküls der Formel I alle Reste R gleich

sein oder aber die Reste R verschieden sein können,

A = einen äthylenisch ungesättigten Rest der allgemeinen Formeln II–V

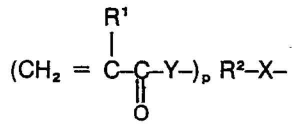

II

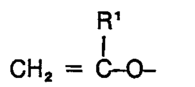

III

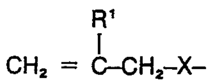

IV

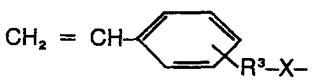

V

mit

$R^1$ = H oder $CH_3$,

$R^2$ = einen (p+1)-funktionellen, geradkettigen oder verzweigten Alkyl- oder einen (p+1)-funktionellen Cycloalkylrest mit jeweils 1–20 Kohlenstoffatomen,

$R^3$ = einen Rest der Bedeutung $R^2$ mit p = 1,

X = O oder $NR^4$,

Y = O, NH oder $NR^4$,

$R^4$ = $CH_3$ oder $C_2H_5$,

n = ganze Zahlen von 1–100 und

p = ganze Zahlen von 1–3, in solchen Molverhältnissen, dass das Zahlenverhältnis der Isocyanatogruppen zu den Hydroxygruppen der Polyester zwischen 0,2 : 1 und 1 : 1 betragen hat, hergestellt worden sind.

2. Verfahren nach Anspruch 1, dadurch gekennzeichnet, dass A die Bedeutung der Formel II besitzt.

3. Verfahren nach Anspruch 1 oder 2, dadurch gekennzeichnet, dass vor der Polymerisation die Ester bzw. Polyester der Formel I mit den polyfunktionellen Isocyanaten in äquivalenten Mengen zu Urethanen umgesetzt worden sind.

4. Verfahren nach einem der Ansprüche 1 bis 3, dadurch gekennzeichnet, dass die Urethane Molekulargewichte von etwa 100 bis etwa 20 000 besitzen.

5. Verfahren nach einem der Ansprüche 1 bis 4, dadurch gekennzeichnet, dass das Reaktionsgemisch weitere olefinisch ungesättigte Verbindungen in Mengen von 0–60 Gew.-%, bezogen auf das Gesamtgewicht der polymerisierbaren Anteile, enthält.

6. Verfahren nach einem der Ansprüche 1–5 zur Herstellung von Klebeverbindungen, dadurch gekennzeichnet, dass solche Urethane unter Sauerstoffausschluss radikalisch in Gegenwart von Initiatoren ggf. zusammen mit anderen olefinisch ungesättigten Verbindungen polymerisiert werden, die durch Umsetzung der polyfunktionellen Isocyanatoverbindungen mit den Estern bzw. Polyestern der Formel I hergestellt worden sind, die einen Polymerisationsgrad n von 1 bis 20, vorzugsweise von 1 bis 10 besitzen.

7. Verfahren nach einem der Ansprüche 1–5 zur Herstellung von Beschichtungen und Überzügen, dadurch gekennzeichnet, dass solche Urethane radikalisch in Gegenwart von Initiatoren, Sensibilisatoren und/oder Katalysatoren ggf. zusammen mit anderen olefinisch ungesättigten Verbindungen (co-)polymerisiert werden, die durch Umsetzung der polyfunktionellen Isocyanatoverbindungen mit den Estern bzw. Polyestern der Formel I hergestellt worden sind, die einen Polymerisationsgrad n von 1 bis 20, vorzugsweise von 1 bis 10 besitzen.

8. Verfahren nach einem der Ansprüche 1–5, dadurch gekennzeichnet, dass A die Bedeutung der Formel IV besitzt.

9. Verfahren nach einem der Ansprüche 1–5 und 8 zur Herstellung elastomerer Formkörper, dadurch gekennzeichnet, dass solche Urethane radikalisch in Gegenwart von Initiatoren, Sensibilisatoren und/oder Katalysatoren ggf. mit weiteren olefinisch ungesättigten Verbindungen (co-)polymerisiert werden, die durch Umsetzung der polyfunktionellen Isocyanatoverbindungen mit Polyestern der Formel I hergestellt worden sind, die einen Polymerisationsgrad n von 2–100, vorzugsweise 3–30, besitzen.

**Claims**

1. Process for the manufacture of polymers from polymerisable urethanes containing unsaturated groups and, optionally, from further olefinically unsaturated compounds, characterised in that the polymerisable urethanes containing unsaturated groups which are polymerised or, optionally, copolymerised with further olefinically unsaturated compounds, by means of radical polymerisation, optionally in the presence of initiators, sensitisers and/or catalysts, are urethanes that have been manufactured by reacting diisocyanatoalkyl and/or polyisocyanatoalkyl and/or diisocyanatoaryl and/or polyisocyanatoaryl compounds with esters or polyesters of the general formula I

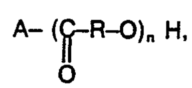

wherein

R denotes straight-chain hydrocarbon radicals having from 2 to 10 carbon atoms which may optionally be substituted by up to 5 methyl, ethyl and/or propyl groups, wherein all the radicals R within one polyester molecule of the formula I may be the same or different,

A denotes an ethylenically unsaturated radical of the general formula II – V:

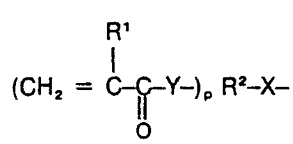

II

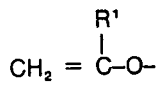
III

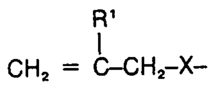
IV

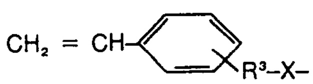
V

wherein

$R^1$ denotes H or $CH_3$,

$R^2$ denotes a (p+1)-functional straight-chain or branched alkyl radical or a (p+1)-functional cycloalkyl radical, each having from 1 to 20 carbon atoms,

$R^3$ denotes a radical having the meaning of $R^2$ when p = 1,

X denotes O or $NR^4$,

Y denotes O, NH or $NR^4$,

$R^4$ denotes $CH_3$ or $C_2H_5$,

n is an integer from 1 to 100 and

p is an integer from 1 to 3,

in such molar ratios that the numerical ratio of the isocyanato groups to the hydroxyl groups of the polyesters was between 0.2 : 1 and 1 : 1.

2. Process according to claim 1, characterised in that A has the meaning of formula II.

3. Process according to claim 1 or 2, characterised in that, prior to polymerisation, the esters or polyesters of the formula I have been reacted in equivalent amounts with poly-functional isocyanates to form urethanes.

4. Process according to one of claims 1 to 3, characterised in that the urethanes have molecular weights of from approximately 100 to approximately 20 000.

5. Process according to one of claims 1 to 4, characterised in that the reaction mixture contains further olefinically unsaturated compounds in amounts of from 0 to 60% by weight, based on the total weight of the polymerisable constituents.

6. Process according to one of claims 1 to 5 for the manufacture of adhesive bonds, characterised in that the urethanes that are polymerised by means of radical polymerisation with the exclusion of oxygen, in the presence of initiators and, optionally, together with other olefinically unsaturated compounds, are urethanes that have been manufactured by reacting poly-functional isocyanato compounds with esters or polyesters of the formula I which have a degree of polymerisation n of from 1 to 20, preferably from 1 to 10.

7. Process according to one of claims 1 to 5 for the manufacture of coverings and coatings, characterised in that the urethanes that are polymerised or, optionally, copolymerised together with other olefinically unsaturated compounds, by means of radical polymerisation, in the presence of initiators, sensitisers and/or catalysts, are urethanes that have been manufactured by reacting poly-functional isocyanato compounds with esters or polyesters of the formula I which have a degree of polymerisation n of from 1 to 20, preferably from 1 to 10.

8. Process according to one of claims 1 to 5, characterised in that A has the meaning of formula IV.

9. Process according to one of claims 1 to 5 and 8 for the manufacture of elastomeric moulded articles, characterised in that the urethanes that are polymerised or, optionally, copolymerised with further olefinically unsaturated compounds, by means of radical polymerisation, in the presence of initiators, sensitisers and/or catalysts, are urethanes that have been manufactured by reacting poly-functional isocyanato compounds with polyesters of the formula I which have a degree of polymerisation n of from 2 to 100, preferably from 3 to 30.

**Revendications**

1. Procédé de préparation de polymères à partir d'uréthannes polymérisables contenant des radicaux insaturés et éventuellement à partir d'autres composés éthyléniques, procédé caractérisé en ce qu'on soumet à une polymérisation ou copolymérisation radicalaire, éventuellement en présence d'amorceurs, de sensibilisateurs et/ou de catalysateurs, éventuellement avec d'autres composés éthyléniques, des uréthannes à radicaux insaturés polymérisables qui ont été préparés par réaction de composés di- et/ou poly-isocyanato-alkyliques et/ou -aryliques avec des esters ou des polyesters répondant à la formule générale I:

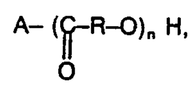

dans laquelle

R représente un radical hydrocarboné linéaire contenant de 2 à 10 atomes de carbone et éventuellement porteur d'au plus 5 substituants pris dans l'ensemble constitué par les radicaux méthyle, éthyle et propyle, les radicaux R situés à l'intérieur d'une même molécule de polyester de formule I pouvant être identiques les uns aux autres ou différents les uns des autres,

A représente un radical éthylénique répondant à l'une des formules générales II à V:

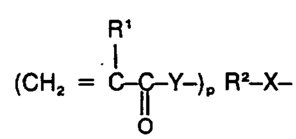
II

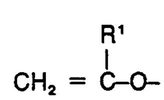
III

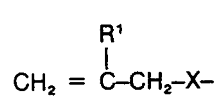
IV

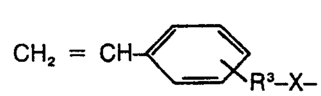
V

$R^1$ représente H ou $CH_3$,

$R^2$ représente un radical alkyle, linéaire ou ramifié, dont la valence est égal à p+1 ou un radical cycloalkyle de valence p+1, chacun de ces radicaux contenant de 1 à 20 atomes de carbone,

$R^3$ représente un radical ayant la signification de $R^2$ avec p = 1,

X représente O ou $NR^4$,

Y représente O, NH ou $NR^4$,

$R^4$ représente $CH_3$ ou $C_2H_5$,

n désigne un nombre entier de 1 à 100 et

p désigne un nombre entier de 1 à 3,

dans des rapports molaires tels que le rapport entre le nombre des radicaux isocyanato et le nombre des radicaux hydroxy des esters ou polyesters soit compris entre 0,2 : 1 et 1 : 1.

2. Procédé selon la revendication 1, caractérisé en ce que A est un radical de formule II.

3. Procédé selon l'une des revendications 1 et 2, caractérisé en ce qu'avant d'effectuer la polymérisation on a fait réagir les esters ou polyesters de formule I avec les isocyanates polyfonctionnels, en des quantités équivalentes, de manière à obtenir des uréthannes.

4. Procédé selon l'une quelconque des revendications 1 à 3, caractérisé en ce que les uréthannes ont des poids moléculaires d'environ 100 à environ 20 000.

5. Procédé selon l'une quelconque des revendications 1 à 4, caractérisé en ce que le mélange réactionnel contient d'autres composés éthyléniques en des quantités de 0 à 60% en poids par rapport au poids total des constituants polymérisables.

6. Procédé selon l'une quelconque des revendications 1 à 5 pour la préparation de jonctions par collage, procédé caractérisé en ce qu'on polymérise à l'abri de l'oxygène, par voie radicalaire, en présence d'amorceurs, éventuellement avec d'autres composés éthyléniques, des uréthannes qui ont été préparés par réaction des composés isocyanato polyfonctionnels avec les esters ou polyesters de formule I qui ont un degré de polymérisation n de 1 à 20, de préférence de 1 à 10.

7. Procédé selon l'une quelconque des revendications 1 à 5 pour la réalisation d'enduits et de revêtements, procédé caractérisé en ce qu'on polymérise ou copolymérise par voie radicalaire, en présence d'amorceurs, de sensibilisateurs et/ou de catalyseurs, éventuellement avec d'autres composés éthyléniques, des uréthannes qui ont été préparés par réaction des composés isocyanato polyfonctionnels avec les esters ou polyesters de formule I ayant un degré de polymérisation n de 1 à 20, de préférence de 1 à 10.

8. Procédé selon l'une quelconque des revendications 1 à 5, caractérisé en ce que A est un radical de formule IV.

9. Procédé selon l'une quelconque des revendications 1 à 5 et 8 pour la préparation d'objets moulés élastomères, procédé caractérisé en ce qu'on polymérise ou copolymérise par voie radicalaire, en présence d'amorceurs, de sensilibisateurs et/ou de catalyseurs, éventuellement avec d'autres composés éthyléniques, des uréthannes qui ont été préparés par réaction des composés isocyanato polyfonctionnels avec des polyesters de formule I ayant un degré de polymérisation n de 2 à 100, de préférence de 3 à 30.